Europäisches Patentamt

European Patent Office

Office européen des brevets

(11) Veröffentlichungsnummer : **0 106 143 B1**

(12) **EUROPÄISCHE PATENTSCHRIFT**

(45) Veröffentlichungstag der Patentschrift :
27.05.87

(51) Int. Cl.⁴ : **B 60 R 25/00, B 60 B 7/00**

(21) Anmeldenummer : **83108940.4**

(22) Anmeldetag : **09.09.83**

(54) **Leichtmetallradfelge mit einer das Lösen der Radmuttern verhindernden Abdeckplatte.**

(30) Priorität : **13.09.82 DE 3233918**

(43) Veröffentlichungstag der Anmeldung :
**25.04.84 Patentblatt 84/17**

(45) Bekanntmachung des Hinweises auf die Patenterteilung : **27.05.87 Patentblatt 87/22**

(84) Benannte Vertragsstaaten :
**AT BE CH DE FR GB IT LI LU NL SE**

(56) Entgegenhaltungen :
**EP-A- 0 106 142
DE-A- 2 828 104
DE-A- 3 007 911
DE-C- 677 385
US-A- 2 535 126
US-A- 3 995 461**

(73) Patentinhaber : **ATS Leichtmetallräder GmbH
Industriegebiet
D-6702 Bad Dürkheim (DE)**

(72) Erfinder : **Graf, Gottfried
Friedensstrasse 32
Phillipsburg (DE)**

(74) Vertreter : **Seibert, Rudolf, Dipl.-Ing.
Tattenbachstrasse 9
D-8000 München 22 (DE)**

## Beschreibung

Die vorliegende Erfindung bezieht sich auf eine Radfelge, insbesondere einer Leichtmetallfelge, für Kraftfahrzeuge gemäß dem Oberbegriff des Patentanspruches 1.

Die Fälle des Diebstahles von Radfelgen, sei es um in den Besitz der Felge selbst zu kommen, was insbesondere bei relativ teuren sportlichen Leichtmetallfelgen der Fall ist, sei es, um in den Besitz des Reifens zu gelangen, nimmt ständig zu. Insbesondere bei Leichtmetallfelgen, bei denen im allgemeinen die Radbefestigung mittels Radschrauben in einem zurückgezogenen Bereich erfolgt, ohne daß Zierkappen oder dergleichen aufgebracht werden, häufen sich die Klagen über Diebstahl derartiger Räder.

Es besteht somit ein Bedarf, die Radfelge gegen Diebstahl zu sichern, und zwar dadurch, daß das Lösen der Radmuttern durch unbefugte verhindert wird.

Hierzu sind schon verschiedene Vorschläge bekannt geworden.

Eine an sich bekannte Lösung besteht in der Verwendung von in sich, beispielsweise über einen Spezialschlüssel gesicherten Radmuttern. Diese Radmuttern sind unverhältnismäßig aufwendig und haben auch den Nachteil, daß ein Radwechsel durch die Besitzer selbst entweder Spezialwerkzeuge oder Spezialschlüssel benötigt, was insbesondere für einen Radwechsel unterwegs besondere Probleme aufwirft.

Darüberhinaus benötigen diese Radmuttern verhältnismäßig viel Platz, d. h. sie stehen weit über die Felge heraus, was eine zusätzliche Verletzungsgefahr mit sich bringt.

Es sind auch schon Spezialfelgen bekannt geworden (US-PS-2 535 126), bei denen eine Diebstahlsicherung dadurch erreicht wird, daß an einem über die Radnabe reichenden an den Halteschrauben zu befestigenden Gestell eine über die Radmuttern reichende Abdeckplatte lösbar, jedoch mit einem Schlüssel sicherbar aufgesetzt wird.

Eine derartige Konstruktion ist relativ platzaufwendig und bei vielen Radtypen, insbesondere mit großer Einpresstiefe, gar nicht realisierbar, weil die Bauhöhe notwendigerweise so groß wird, daß das Schloß über die Felge und ggf. sogar über den Fahrzeugrahmen hinaus reicht und damit nicht nur unschön wirkt, sondern eine Verletzungsgefahr im Straßenverkehr wesentlich erhöht.

Durch die DE-A-2 828 104 ist gemäß dem Oberbegriff des Anspruchs 1, eine Felge mit einer Diebstahlsicherung in Form einer Abdeckplatte bekannt geworden, bei welcher das die Abdeckplatte für die Radmuttern sichernde Schloß mit einem Riegel in in der Öffnung für den Achsstummel vorgesehene Hinterschneidungen eingreift. Die bei dieser Konstruktion beschriebenen Hinterschneidungen können nur mit großem Aufwand angebracht werden, wobei die dabei notwendige Präzision die Fertigung zusätzlich erschwert.

Aufgabe der Erfindung ist es, eine Radfelge mit einer ein unbefugtes Lösen der Radmuttern verhindernden Abdeckplatte so anzugestalten, daß an der Felge selbst bis auf das Vorsehen eines Anlagerandes für die Abdeckplattenbegrenzung die Gestaltung des Rades frei wählbar ist, wobei eine Anpassung an die Besonderheiten der einzelnen Radtypen durch einfache Formanpassung der Abdeckplatte möglich ist, indem die Halterung an der Nabenöffnung ohne zusätzliche Halte- und Konstruktionsteile erfolgt.

Diese Aufgabe wird mit einer Radfelge mit den Merkmalen des Patentanspruches 1 gelöst.

Besonders vorteilhafte Weiterbildungen ergeben sich aus den Unteransprüchen.

Bei der Radfelge nach der Erfindung wird an der Abdeckplatte im Bereich der Nabenöffnung der Radfelge eine in die Nabenöffnung reichende und hinter den die Nabenöffnung nach vorne abschließenden Rand dieser Öffnung greifende Haltenase zum Eingriff hinter den Rand auf einer Seite der Nabenöffnung vorgesehen und an der im Bezug auf die Nabenöffnung diagonal zur Haltenase liegenden Seite ein Verriegelungsteil, vorzugsweise in Form eines Zylinderschlosses mit einem Drehriegel so versehen, daß beim Verschwenken des Drehriegels in die Verriegelungsstellung dieser ebenfalls hinter den Rand der Nabenöffnung zu liegen kommt. Sobald der Drehriegel in seine Verriegelungsstellung gedreht ist, kann die Platte von der Nabenöffnung nur noch nach Drehen des Drehriegels, was dem Besitz des entsprechenden Schlüssels oder Werkzeuges voraussetzt, abgenommen werden.

Einzelheiten der Radfelge mit der Sicherungsabdeckplatte nach der Erfindung werden im folgenden anhand der anliegenden Zeichnungen im einzelnen erläutert.

Dabei zeigen:

Figur 1 schematisch in einer Schnittdarstellung eine Felge, die mit einer mit den Merkmalen der Erfindung ausgerüsteten Abdeckplatte im Bereich der Halteschrauben sicherbar ist,

Figur 2 in einer Schnittdarstellung die Halteplatte selbst mit ihren Sicherungsteilen,

Figur 3 eine Schnittdarstellung gemäß der Linie III-III in Fig. 2 und

Figur 4 eine Schnittdarstellung durch die Halteplatte gemäß der Linie IV-IV in Fig. 2.

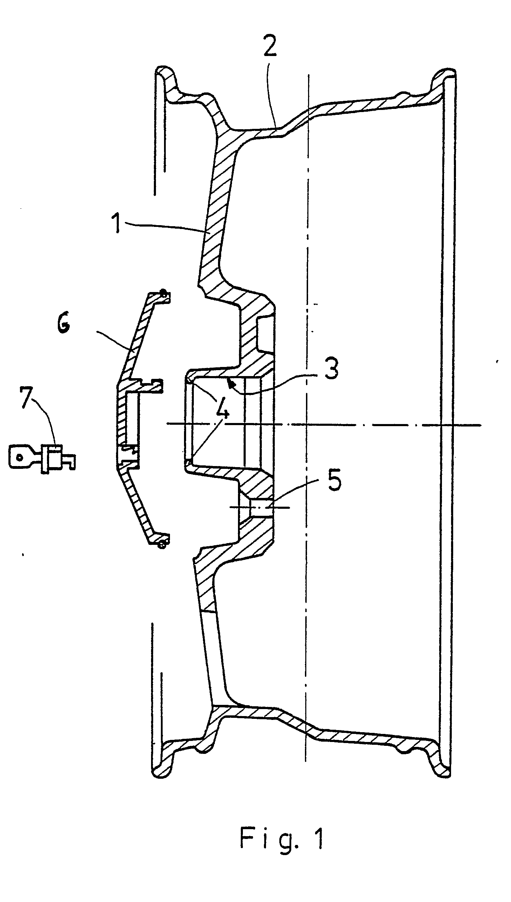

In der Fig. 1 ist mit 1 die Schüssel einer Leichtmetallfelge bezeichnet, die auf ihrem Umfang den Felgenring 2 trägt. Im mittleren Bereich weist die Radschüssel 1 eine Nabenöffnung 3 auf, die nach vorne durch einen Rand 4 abgeschlossen ist. Um die Nabenöffnung herum sind die Bohrungen 5 für — nicht dargestellte — Radschrauben gleichmäßig auf dem Umfang verteilt.

Voraussetzungsgemäß soll ein Lösen der beim Montieren einer Felge auf die Radbolzen aufzuschraubenden Muttern mit Hilfe einer Abdeckplatte 6 gesichert werden. Diese Abdeckplatte ist in Fig. 1 in abgezogenem Zustand schematisch in einer Schnittdarstellung gezeigt.

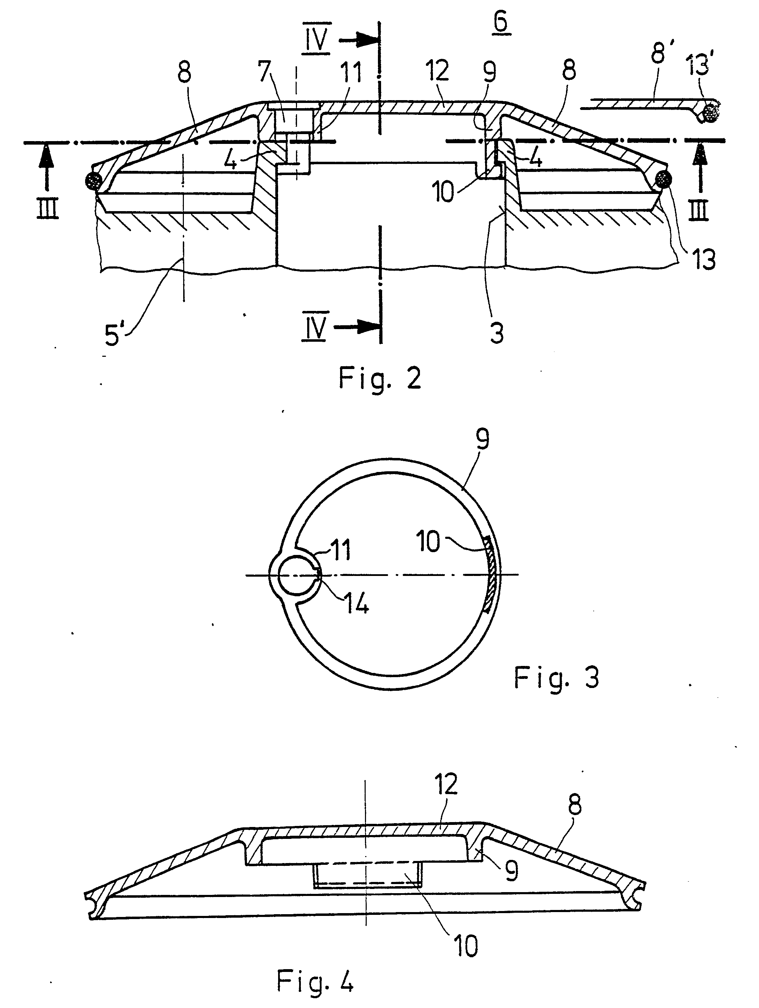

Die Abdeckplatte 6 besitzt, wie im einzelnen noch anhand der Fign. 2 bis 4 erläutert wird, eine Haltenase und diametral dazu versetzt ein Sperrschloß 7, das einen Drehriegel aufweist, der mit Hilfe eines Schlüssels 8 zwischen Offen- und Sperrstellung schwenkbar ist.

In der Fig. 2 ist die entsprechende Abdeckplatte (6) in einem etwas vergrößertem Maßstab, einem Maßstab, der im wesentlichen den Abmessungen einer praktischen Ausführungsform entspricht, wiedergegeben. Die Abdeckplatte 6 ist in der voll ausgezogenen Form konvex ausgeführt, wobei der die Nabenöffnung 3 abschließende Teil 12 in etwa plan gehalten ist, während die überstehenden Ränder 4 zurückgezogen sind.

Durch die Wiedergabe eines überstehenden Teiles 8, 8' ist angedeutet, daß die Abdeckplatte 6 aber auch jede andere Form, z. B. eine vollständig plane Form aufweisen kann.

Der untere Teil in der Darstellung nach Fig. 2 zeigt einen Ausschnitt aus dem Mittelteil der Radfelge, wobei die Bohrung für einen Radbolzen lediglich durch eine gestrichelte Linie 5' angedeutet ist.

Die Abdeckplatte 6 weist auf ihrer Innenseite einen ringförmigen Rand 9 auf, der einen lichten Durchmesser aufweist, der im wesentlichen dem Durchmesser des die Nabenöffnung begrenzenden Randes entspricht. In der rechten Seite ist dabei dieser Rand 9 in einem Bereich, der etwa 60 Grad des Umfanges entspricht, zu einer Haltenase 10 verlängert, die unter den Rand greift. Auf der linken Seite des flachen Teiles 12 der Abdeckplatte 6 wird als Verriegelungsteil ein Sperrschloß 7 von oben eingeführt, wozu der Rand 9 zu einer kreisförmigen Aufnahmeöffnung 11 aufgeweitet ist.

Diese an sich kreisförmige Öffnung zur Aufnahme des Schlosses 7 weist eine Nut 14 auf, in die ein an dem Schloßkörper angebrachten Steg entsprechend eingreift, so daß das Schloß unverdrehbar in dieser Öffnung gehalten ist.

Das Schloß selbst ist in an sich bekannter Weise mit einem Drehriegel versehen, der bei Verschwenken in die Verriegelungsstellung hinter dem Rand 4 der Nabenöffnung 3 eingreift.

Das Schloß selbst ist oben mit einem Rand versehen, was ermöglicht, das Schloß in die Abdeckplatte von oben einzuführen, ohne daß es nach innen durchfällt. Eine Sicherung in dieser Lage ist nicht notwendig, da das Schloß, sobald der Drehriegel in die Verriegelungsstellung geschwenkt ist, weder nach oben herausgezogen noch nach innen hindurchgeschoben werden kann.

Dieses einfache Einsetzen des Verriegelungsschlosses hat nicht nur den Vorteil, daß keinerlei Montagearbeiten notwendig sind, sondern es gibt darüberhinaus bei einem z. B. einem notwendigen Radwechsel notwendig werdenden Lösen der Abdeckplatte der Bedienungsperson die Möglichkeit, nach Drehen des Sperriegels in die Offenstellung das Schloß am Schlüssel herauszuziehen, wodurch eine Öffnung entsteht, in die mit einem Werkzeug eingegriffen werden kann, wenn die Halteplatte 6 sich verklemmt oder verklebt haben sollte.

Um dies zu garantieren, ist vorgesehen, solche Zylinderschlösser einzusetzen, die in nur einer Stellung ein Abziehen des Schlüssels ermöglichen, während in der anderen Stellung, der Offenstellung, der Schlüssel so fest sitzt, daß mit ihm das Schloß aus der Öffnung gezogen werden kann.

In der Fig. 2 ist noch gezeigt, daß es vorteilhaft ist, den Rand der Abdeckplatte mit einem Dichtungsring 13 zu versehen, um ein Eindringen von Schmutz und Staub und insbesondere auch eine metallische Berührung zwischen Abdeckplatte und Radschüssel, die ggf. zu Klappergeräuschen führen könnte, zu vermeiden. In der abgewandelten form 8' ist dieser Dichtring mit 13' bezeichnet.

Die Fig. 3 zeigt eine Schnittdarstellung in dem Bereich der Abdeckplatte, die auf der Stirnseite der Nabenöffnung aufliegt, und zwar längs der Linie III-III in der Ausführungsform nach Fig. 2 in Blickrichtung nach oben.

Die Fig. 4 zeigt eine Schnittdarstellung gemäß der Linie IV-IV in Fig. 2. Es ist dort zu ersehen, daß die Haltenase 10 nur über einen Bereich von ca. 60° des Umfanges am Steg 9 der Innenseite der Abdeckplatte vorgesehen ist.

Die vorliegende Erfindung wurde anhand eines konkreten Ausführungsbeispieles erläutert, um zu zeigen, daß eine Halteplatte zur Sicherung von Radmuttern gegen unbefugtes Lösen gemäß der Erfindung in einfacher Weise unmittelbar an der Nabenöffnung der Radfelge selbst, ohne zusätzliche Hilfsmittel, Konstruktion oder Umkonstruktionen der Radfelgen möglich gemacht ist. Dabei greifen Haltenasen und Sperrriegel so geringfügig in die Nabenöffnung ein, daß dadurch im Betrieb keinerlei Störungen zu befürchten sind.

Das erläuterte Ausführungsbeispiel zeigt auch, daß in der Gestalt der Abdeckplatte keinerlei Begrenzung gegeben ist und daß diese in ganz einfacher Weise sehr leicht den verschiedensten Ausbildungsformen von Radfelgen angepaßt werden kann.

Dabei sei im besonderen darauf hingewiesen, daß bei einer derartig ausgebildeten Abdeckplatte auch noch ornamentartige Öffnungen in der Abdeckplatte angebracht werden können, sofern nur dafür gesorgt ist, daß durch diese Öffnungen hindurch nicht ein zum Lösen von Radmuttern geeignetes Werkzeug eingeführt werden kann.

Dabei sei auch darauf hingewiesen, daß es für viele Zwecke reicht, anstelle einer kreisrunden Platte eine Mittelplatte 12 auf der Öffnung für die Radnabe mit analog den Rändern 4 in Fig. 2 sternförmigen Ansätzen vorzusehen, die sich genau über die einzelnen Radmuttern erstrecken. Dies bringt eine zusätzliche Gewichtseinsparung mit sich und erfüllt den gleichen Zweck.

In diesem Fall empfiehlt es sich aber, diese sternförmig ausgebildete Abdeckplatte gegen Verdrehung zu sichern, in dem beispielsweise an einer im Bereich der Haltenase 10 liegenden beliebigen Stelle im Rand 4 eine Nut vorzusehen, in die ein an der Haltenase vorgesehener Steg (Feder) eingreift. Selbstverständlich ist auch die Umkehrung denkbar, daß in die Haltenase eine Nut eingefügt wird, die mit einer im Bereich des Randes 4 vorgesehenen Feder entsprechend zusammenwirkt. Dies ist jedoch deshalb aufwendiger, da die Anbringung dieser Feder ggf. schon beim Gießen der Radfelge vorgesehen werden muß, während eine einfache Nut leicht einarbeitbar ist.

Auch ein Aufsetzen von, z. B. mit Fahrzeug- oder Herstellerkennzeichen versehenen Rad- oder Nabenkappen kann zusätzlich vorgesehen werden, indem Halteöffnungen oder Haltelamellen in oder an der Abdeckplatte vorgesehen werden.

Auch die Auswahl von Material für die Abdeckplatte (Eisen, Aluminium oder dgl.) sowie Herstellungsart (Schmieden, Ziehen, Pressen, Gießen oder dgl.) ist ohne weiteres variierbar. Dabei kann auch ein im gewissen Umfang elastisches Materials zur Herstellung der Abdeckplatte verwendet werden, um eine Verriegelung unter einer gewissen Vorspannung zu erhalten, was eine bessere Abdichtung bedeuten kann, was aber auch mit Sicherheit den Ausgleich von Fertigungstoleranzen garantiert.

## Patentansprüche

1. Fahrzeugradfelge aus Leichtmetall mit einem zentralen Vorsprung zur Aufnahme der Achse und mit einer ein unbefugtes Lösen der Radmuttern verhindernden Abdeckplatte (6) mit einer Befestigungseinrichtung mit einem Sperrschloß (7), dessen Riegel in Hinterschneidungen im zentralen Vorsprung einrastbar ist dadurch gekennzeichnet, daß

a) das Sperrschloß (7) am Rand des zentralen Vorsprungs liegt und der Drehriegel des Sperrschloßes mit einer dem Drehriegel diametral gegenüber liegenden Haltenase (10) der Abdeckplatte zusammen schlusselartig wirkt,

b) die Hinterschneidungen als radial nach innen reichender Rand (4) axial außen am zentralen Vorsprung ausgebildet sind.

2. Fahrzeugradfelge nach Anspruch 1, dadurch gekennzeichnet, daß die hinter den nach vorne abschließenden Rand (4) der Nabenöffnung (3) greifende Haltenase (10) über ein Segment von etwa 60 Grad ausgebildet ist.

3. Fahrzeugradfelge nach einem der Ansprüche 1 und 2, dadurch gekennzeichnet, daß der Außenrand der Abdeckplatte (6) mit einem aus elastischem Material bestehenden Dichtungsring (13) versehen ist.

4. Fahrzeugradfelge nach einem der Ansprüche 1 bis 3, dadurch gekennzeichnet, daß die Nabenöffnung (3) abdeckende Rand (4) zur Drehsicherung der Abdeckplatte (6) eine Nut aufweist, in die ein im Bereich der Haltenase (10) vorgesehener Steg eingreift.

## Claims

1. A wheel rim made of light metal with a projection on the central hub opening for the axis and a cover plate (6) to prevent unauthorized loosing of mounting bolts comprising lock means with a closing lock the bolt of it is able to engage behind a head of the projection of the central hub, characterized in that,

a) the closing lock (7) is provided on the border of said projecting of the central hub and the turning bolt of the closing lock works together like a key with a holding bar (10) of the cover plate lying opposite diametrally to the turning bolt,

b) the head is formed as a border (4) projecting radially inside on the outside projection of the central hub.

2. Wheel according to claim 1, further characterized in that said holding bar (10) interlocking behind said border (4) in front of the central hub (3) is formed about a segment of ca. 60 degrees.

3. Wheel according to one of the claims 1 and 2, further characterized in that the outer periphery of said cover plate (6) is provided with an elastic sealing ring.

4. Wheel according to one of the claims 1 to 3, further characterized in that the border (4) of the cover plate (3) has a nut to prevent relative rotation of the cover plate (6) in which nut in the area of the holding bar gears in a stick.

## Revendications

1. Jante en métal léger pour roue de véhicule avec une partie centrale saillante destinée à recevoir l'axe et avec un capot de couverture (6) empêchant le dévissage non-autorisé des écrous de roue et comportant un dispositif de fixation avec une serrure de blocage (7) dont le verrou est susceptible de s'enclencher dans des détalonnages ménagés dans ladite partie saillante, caractérisée par le fait

a) que la serrure de blocage (7) est situé sur le bord de la partie centrale saillante et que le verrou rotatif de la serrure de blocage coagit à la manière d'une clé avec un bec de retenu (10) dudit capot et se situant diamétralement en face du verrou rotatif,

b) que les détalonnages sont réalisés axialement à l'extérieur sur la partie centrale saillante sous la forme d'un bord (4) s'étendant radialement vers l'intérieur.

2. Jante pour roue de véhicule selon la revendication 1, caractérisée par le fait que le bec de retenu (10) qui passe derrière le bord antérieur (4) de l'ouverture du moyeu (3), s'étend sur un segment d'environ 60°.

3. Jante pour roue de véhicule selon l'une des revendications 1 et 2, caractérisée par le fait que le bord extérieur du capot de couverture (6) est pourvu d'un anneau d'étanchéité (13) fait avec un matériau élastique.

4. Jante pour roue de véhicule selon l'une des revendications 1 à 3, caractérisée par le fait que le bord (4) qui recouvre l'ouverture du moyeu (3) comporte, pour empêcher la rotation du capot de couverture (6), une gorge dans laquelle pénètre une barrette prévue au niveau du bec de retenu (10).

Fig. 1

Fig. 2

Fig. 3

Fig. 4